# EUROPÄISCHE PATENTSCHRIFT

(11) **EP 1 327 122 B1**
(45) Veröffentlichungstag und Bekanntmachung des Hinweises auf die Patenterteilung: **11.03.2009**
(21) Anmeldenummer: 01987871.9
(22) Anmeldetag: 18.10.2001
(51) Int. Cl.: G01F 1/10

(54) **WASSERZÄHLER FÜR DEN EINBAU IN ROHRLEITUNGEN EINER NENNWEITEN-GRUPPE UND VERFAHREN ZUM BETREIBEN DERARTIGER WASSERZÄHLER**
WATER METERS TO BE MOUNTED IN THE PIPE CONDUITS OF A NOMINAL DIAMETER CLASS AND METHOD FOR OPERATING SUCH WATER METERS
COMPTEURS D'EAU DESTINES A ETRE MONTES DANS DES CANALISATIONS CLASSEES DANS UN GROUPE COMPRENANT DIFFERENTES SECTIONS NOMINALES DE PASSAGE ET PROCEDE POUR FAIRE FONCTIONNER DE TELS COMPTEURS D'EAU

(30) Priorität: 20.10.2000 DE 10052274
(43) Veröffentlichungstag der Anmeldung: 16.07.2003
(73) Patentinhaber: M & FC Holding LLC, Raleigh, NC 27 615 (US)
(72) Erfinder: KUHLEMANN, Holger, 31157 Sarstedt (DE); NETTEMANN, Karsten, 30459 Hannover (DE); KÜHN, Eckhard, 31319 Sehnde (DE)
(74) Vertreter: Seewald, Jürgen
(86) Internationale Anmeldenummer: PCT/DE2001/004015
(87) Internationale Veröffentlichungsnummer: WO 2002/033359

(56) Entgegenhaltungen:
- DE-A- 3 206 433
- GB-A- 2 002 856
- US-A- 5 277 071
- US-A- 5 877 430

## Beschreibung

Die vorliegende Erfindung betrifft einen Wasserzähler gemäß dem Oberbegriff des Anspruchs 1 sowie ein Verfahren zum Betreiben von Wasserzählern gemäß dem Oberbegriff des Anspruchs 7.

Derartige Wasserzähler, die nach dem Woltmann-Prinzip arbeiten, sind beispielsweise aus WO 91/04462, DE-PS 841 952, DE 37 32 703 A1, US 3,811,323 und US 3,999,432 bekannt.

Die GB 2 002 856 A offenbart insbesondere einen Wasserzähler für den Einbau in Rohrleitungen einer Nennweiten-Gruppe mit aufeinander folgenden Nennweiten, der ein Gehäuse mit fluchtendem Einlaufbereich und Auslaufbereich und einem dazwischen gleichachsig angeordneten Messeinsatz, der für alle Nennweiten der Nennweiten-Gruppen gleich ist, und einen Messring aufweist. In dem Messring sind koaxial ein stromauf liegendes Haltemittel und ein stromab liegendes Haltemittel angeordnet, zwischen denen ein Flügelrad drehbar gelagert ist, und dessen Flügel in einen zwischen den Haltemitteln und dem Messring gebildeten Ringkanal hineinragen. Zwischen einem Zählwerk des Messeinsatzes ist ein Wechselgetriebe vorgesehen. Durch einfaches Verstellen des Wechselgetriebes vor dem Betrieb des Wasserzählers kann auf diese Weise unterschiedlichen Nennweiten solcher Wasserzähler Rechnung getragen werden. Solche Wasserzähler werden, wie erwähnt, in Rohrleitungen unterschiedlicher Nennweiten eingebaut, wobei, um nicht für jede Nennweite einen in der Baugröße angepassten Messeinsatz herstellen zu müssen, Nennweiten zu Nennweiten-Gruppen zusammengefasst werden, in denen gleiche Messeinsätze, d.h. baugrößengleiche und konstruktivgleiche Messeinsätze zum Einsatz kommen. Dadurch können die Herstellungskosten für die Messeinsätze gesenkt werden.

Nach dem Stand der Technik müssen die Messeinsätze einer Nennweiten-Gruppe für jede Nennwerte geeicht werden. Das bringt verschiedene Nachteile mit sich. Zum einen erhöht sich dadurch der Aufwand beim Eichen, da in den Prüfständen an die unterschiedlichen Nennweiten angepasste Ausrüstungsteile bereitgehalten werden müssen. Zum anderen gestaltet sich der Service schwierig, da von den Betreibern der Zähler bei einer Service-Anforderung häufig falsche Nennweiten angegeben werden. Der Service-Techniker bringt dann entweder einen falschen Messeinsatz zum Einbauort mit, d.h. einen auf eine andere Nennweite geeichten Messeinsatz, oder er nimmt vorbeugend gleich mehrere, auf verschiedene Nennweiten der Nennweiten-Gruppe geeichte Messeinsätze mit. Ein weiterer Nachteil ist darin zu sehen, dass sich der Aufwand in der Lagerhaltung erhöht, da für jede Nennweiten-Gruppe eine der Zahl der darin zusammengefassten Nennweiten entsprechende Anzahl geeichter Messeinsätze bereitgehalten werden muss.

Aufgabe der vorliegenden Erfindung ist es, die oben genannten Nachteile des Standes der Technik abzustellen.

Gelöst wird diese Aufgabe erfindungsgemäß durch Wasserzähler mit den Merkmalen des Anspruchs 1 und durch ein Verfahren mit den Merkmalen des Anspruchs 7.

Die Lösung dieser Aufgabe liegt ganz allgemein gesagt also darin, dass in den Wasserzählern an der relevanten Stelle, nämlich im Ringkanal unmittelbar vor dem Flügelrad, unabhängig von der Nennweite der angeschlossenen Rohrleitung, eine im wesentlichen rechteckige Geschwindigkeitsverteilung bei im wesentlichen parallel zur Wandung des Ringkanals ausgerichteten Strömungsfäden vorliegt, wobei diese Strömungsverhältnisse bei gleichen Durchflüssen im wesentlichen identisch sind. Es ist daher nur noch erforderlich, den Meßeinsatz für eine Nennweite der Nennweiten-Gruppe zu eichen, der dann aber auch in jeder Nennweite der Nennweiten-Gruppe ohne Änderung der Justage und ohne erneutes Eichen zum Einsatz kommen kann.

In vorteilhafter Ausgestaltung der Wasserzähler weist das stromauf liegende Haltemittel eine im wesentlichen lotrechte Anströmfläche auf, die in eine zylindrische oder leicht konisch divergierende Mantelfläche übergeht, welche die Innenwandung des Ringkanals bildet, wobei der Übergang so gestaltet ist, dass unmittelbar vor dem Flügelrad eine im wesentlichen rechteckige Geschwindigkeitsverteilung vorliegt.

Diese Formgebung trägt dazu bei, dass auch bei der kleinsten bzw. bei den kleineren Nennweiten der Nennweiten-Gruppe nicht nur gleiche integrierte Strömungsgeschwindigkeiten vor dem Flügelrad vorliegen, sondern auch, dass dort gleichmäßige Strömungsverhältnisse herrschen, aus denen eine über den Querschnitt des Ringkanals gesehen gleichmäßige Anströmung der Flügel des Flügelrades resultiert.

Weitere, vorteilhafte Ausgestaltungen der Wasserzähler ergeben sich aus den übrigen Unteransprüchen.

Die Erfindung wird nachstehend anhand eines Ausführungsbeispiels und einer dazugehörigen Zeichnung näher erläutert. Es betrifft Wasserzähler für den Einbau in Rohrleitungen der Nennweiten-Gruppe 50 - 100 mm. Zu dieser Nennweiten-Gruppe gehören die in der Praxis gebräuchlichen Nennweiten 50, 80 und 100 mm, sowie ggfs. noch eine vierte Nennweite von 65 mm.

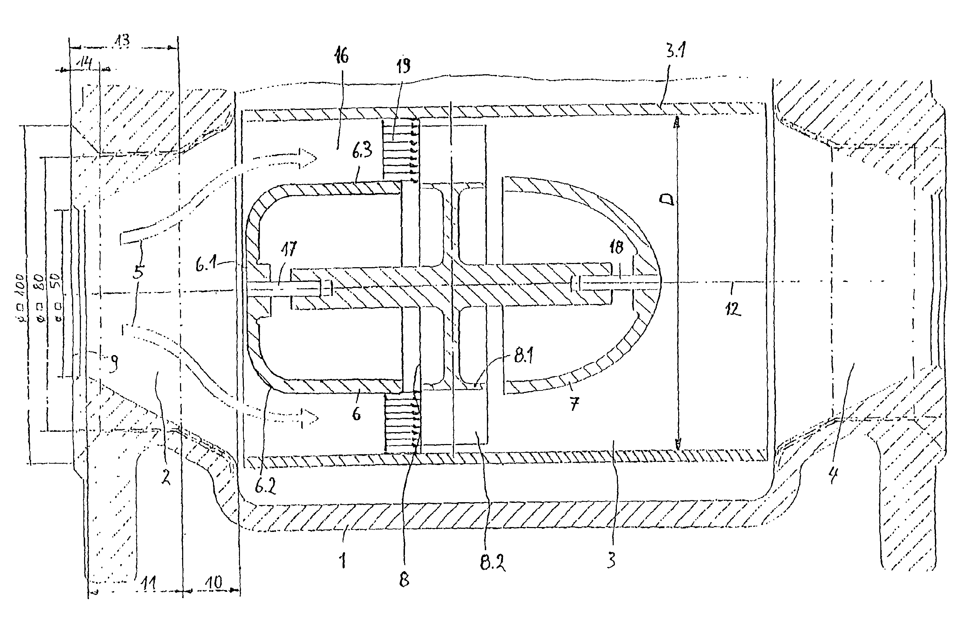

Die einzige Figur der Zeichnung zeigt in schematischer Weise einen Längsschnitt durch einen Wasserzähler, dessen Gehäuse 1 einen Einlaufbereich 2 und und einen Auslaufbereich 4 aufweist, die auf einer Gehäuse-Längsachse 12 miteinander fluchten. Zwischen dem Einlaufbereich 2 und dem Auslaufbereich 4 ist gleichachsig ein Messeinsatz 3 angeordnet. Dieser ist als Woltmannzähler ausgebildet, der in Richtung der Pfeile 5 angeströmt wird und zwei eierbecherförmige Haltemittel 6, 7 aufweist. Das Haltemittel 6 ist stromauf angeordnet, also dem Einlaufbereich 2 zugeordnet, während das Haltemittel 7 stromab angeordnet ist, und somit dem Auslaufbereich 4 benachbart gegenüber liegt. Die Haltemittel 6, 7 sind über nicht dargestellte Streben an einem ebenfalls zum Messeinsatz 3 gehörenden Messring 3.1 gehaltert. Zwischen den Haltemitteln 6 und 7 ist ein Flügelrad 8 angeordnet, welches aus einer Flügelradnabe 8.1 und darauf angeordneten, auf den Umfang verteilten Flügeln 8.2 besteht. Diese Flügel 8.2 ragen über den Umfang der Haltemittel 6 und 7 hinaus in einen Ringkanal 16 hinein, welcher zwischen der Wandung der Haltemittel 6 und 7 und dem Messring 3.1 gebildet ist. Das Flügelrad 8 ist über Stifte 17, 18 an den Haltemitteln 6 bzw. 7 drehbar gelagert. Die aus der Anströmung des durch das Gehäuse 1 strömenden Wassers resultierende Drehbewegung des Flügelrades 8 wird über eine nicht dargestellte Welle auf ein ebenfalls nicht dargestelltes Zählwerk übertragen, welches oberhalb des Messeinsatzes 3 am Gehäuse 1 befestigt ist. Das Zählwerk sowie auch der Übertragungsmechanismus gehören zum Stand der Technik, so dass sich hier nähere bzw. weitere Erläuterungen dazu erübrigen.

Die Zeichnung zeigt ein Gehäuse 1, welches für den Anschluss an eine Rohrleitung mit der Nennweite 50 mm vorgesehen ist. Die Innenkontur des Einlaufbereichs 2 sowie die Innenkontur des Auslaufbereichs 4 ist für diesen Zähler mit Voll-Linien dargestellt. Um weitere zeichnerische Darstellungen zu erübrigen, sind in diese Zeichnung die Innenkonturen von Gehäusen 1 für den Anschluss an Rohrleitungen mit den Nennweiten 80 und 100 mm in Strich-Punkt-Linien eingezeichnet.

Den Wasserzählern der Nennweiten-Gruppe gemeinsam ist eine dem Haltemittel 6 des Messeinsatzes 3 benachbarte erste Zone 10 der Innenkontur des Einlaufbereichs 2, die sich in Richtung zum Einlaufbeginn 9 hin konisch verjüngt und sich etwa mit dem Durchmesser D des Ringkanals 16 in diesen öffnet.

Für die kleinste Nennweite von 50 mm setzt sich diese erste konische Zone 10 als zweite konische Zone 11 bis zum Einlaufbeginn 9 hin kontinuierlich fort.

Bei dem Wasserzähler für eine mittlere Nennweite von 80 mm schließt sich an die dem Haltemittel 6 des Messeinsatzes 3 benachbarte Zone 10 eine bis zum Einlaufbeginn 9 parallel zur Längsachse 12 des Zählers verlaufende Zone 13 der Innenkontur des Einlaufbereichs 2 an. Unter parallel soll auch ein nahezu paralleler Verlauf verstanden werden, der zum Beispiel aus gießtechnischen Gründen vorliegen kann.

Außer den drei Nennweiten von 50, 80 und 100 mm kann in der Nennweiten-Gruppe auch eine weitere mittlere Nennweite von 65 mm vorkommen. Es wird sich dann ähnlich wie bei der Nennweite von 80 mm eine Innenkontur ergeben, die parallel oder nahezu parallel zur Längsachse 12 des Zählers verläuft, sich an die Zone 10 anschließt, aber auf die Nennweite von 65 mm abgestimmt ist.

Für die größte Nennweite von 100 mm geht die parallel zur Längsachse 12 des Zählers verlaufende Zone 13 vor dem Einlaufbeginn 9 in eine sich konisch erweiternde Zone 14 über.

Diese bei den drei oder vier Wasserzählern der Nennweiten-Gruppe für die unterschiedlichen Nennweiten ausgebildete Innenkontur des Einlaufbereichs 2 bedeutet, dass bei der kleinsten Nennweite von 50 mm die sich vom Einlaufbeginn 9 konisch erweiternde Innenkontur die Strömungsgeschwindigkeit bis zum Messeinsatz 3 vermindert, dass bei dem Wasserzähler mit der mittleren Nennweite von 80 mm bzw. bei dem Wasserzähler mit der Nennweite von 65 mm die Strömungsgeschwindigkeit erst in der Zone 10 vermindert wird, und bei dem Wasserzähler mit der Nennweite von 100 mm die Strömungsgeschwindigkeit in der Zone 14 zunächst erhöht, dann konstant gehalten und in der Zone 10 wieder vermindert wird. Hierdurch lassen sich im Zusammenwirken mit dem Haltemittel 6 gleichmäßige Strömungsverhältnisse, d.h., eine im wesenlichen rechteckige Geschwindigkeitsverteilung 19 bei im wesentlichen parallel zur Wandung des Ringkanals 16 ausgerichteten Strömungsfäden unmittelbar vor dem Flügelrad 8 erreichen.

Das stromauf liegende Haltemittel 6 bildet einen Anströmkörper für das in das Gehäuse 1 in Richtung 5 einströmende Wasser. Der Wasserstrom teilt sich am Haltemittel 6 auf und durchfließt dann den Ringkanal 16, um das Flügelrad 8 anzutreiben. Das Haltemittel 6 besitzt eine lotrechte Anströmfläche 6.1, die in einem Radius 6.2 in eine leicht konisch divergierende Mantelfläche 6.3 übergeht. Diese Ausbildung sorgt mit dafür, dass auch bei den kleineren Nennweiten, insbesondere bei der kleinsten Nennweite von 50 mm, die Strömungsfäden den Ringkanal 16 unmittelbar vor dem Flügelrad 8 bei im wesentlichen paralleler Ausrichtung zur Wandung des Ringkanals 16 gleichmäßig durchsetzen.

Es ist praktisch sinnvoll, die Innenkontur des Auslaufbereiches 4 identisch mit der Innenkontur des Einlaufbereiches 2 auszubilden.

Die Erfindung ist nicht nur bei dem dargestellten Wasserzähler anwendbar, sondern auch bei Verbund-Wasserzählern, die aus einem in einer Hauptleitung angeordneten Hauptzähler für die Erfassung größerer Durchflüsse und einem in einer Nebenleitung angeordneten Nebenzähler für die Erfassung kleinerer Durchflüsse sowie einem Umschaltventil mit einem entgegen der Strömung 5 belasteten Verschlussglied bestehen, welches in Schließstellung an einem Ventilsitz anliegt und den Durchfluss durch den Hauptzähler bei Erreichen eines bestimmten Grenzdurchflusses freigibt - bzw. sperrt.

## Patentansprüche

1. Wasserzähler für den Einbau in Rohrleitungen einer Nennweiten-Gruppe mit aufeinander folgenden Nennweiten, mit einem Gehäuse (1) mit fluchtendem Einlaufbereich (2) und Auslaufbereich (4) und einem dazwischen gleichachsig angeordneten Messeinsatz (3), der für alle Nennweiten der Nennweiten-Gruppen gleich ist und einen Messring (3.1) aufweist, in dem koaxial ein stromauf liegendes Haltemittel (6) und ein stromab liegendes Haltemittel (7) angeordnet sind, zwischen denen ein Flügelrad (8) drehbar gelagert ist, dessen Flügel (8.2) in einen zwischen den Haltemitteln (6, 7) und dem Messring (3.1) gebildeten Ringkanal (16) hineinragen, **dadurch gekennzeichnet, dass** eine dem stromauf liegenden Haltemittel (6) benachbarte Zone (10) der Innenkontur des Einlaufbereiches (2) für alle Nennweiten der Nennweiten-Gruppe gleich ist, indem sie sich in Richtung zum Einlaufbeginn (9) hin verjüngt und sich zum Haltemittel (6) etwa mit dem Durchmesser (D) des Ringkanals (16) öffnet, und die Innenkontur des Einlaufbereichts (2) und die Außenkontur des stromauf liegenden Haltemittels (6) so ausgebildet sind, dass unabhängig von der Nennweite der angeschlossenen Rohrleitung im Ringkanal (16) unmittelbar vor dem Flügelrad (8) eine im wesentlichen rechteckige Geschwindigkeitsverteilung bei im wesentlichen parallel zur Wandung des Ringkanals (16) ausgerichteten Strömungsfäden vorliegt.

2. Wasserzähler nach Anspruch 1, **dadurch gekennzeichnet, dass** das stromauf liegende Haltemittel (6) eine im wesentlichen lotrechte Anströmfläche (6.1) aufweist, die in eine zylindrische oder leicht konisch divergierende Mantelfläche (6.3) übergeht, welche die Innenwandung des Ringkanals (16) bildet, wobei der Übergang so gestaltet ist, dass unmittelbar vor dem Flügelrad (8) eine im wesentlichen rechteckige Geschwindigkeitsverteilung vorliegt.

3. Wasserzähler nach Anspruch 2, **dadurch gekennzeichnet, dass** der Übergang ein Radius (6.2) ist.

4. Wasserzähler nach einem der vorhergehenden Ansprüche, **dadurch gekennzeichnet, dass** sich die konische Verjüngung der Zone (10) als zweite sich verjüngende Zone (11) für die kleinste Nennweite der Nennweiten-Gruppe bis zum Einlaufbeginn (9) fortsetzt und dort mit der kleinsten Nennweite endet.

5. Wasserzähler nach einem der Ansprüche 1 - 3, **dadurch gekennzeichnet, dass** sich an die Zone (10) für eine bzw. mehrere mittlere Nennweiten ein bis zum Einlaufbeginn (9) parallel oder nahezu parallel zur Längsachse (12) des Wasserzählers verlaufende Zone (13) der Innenkontur anschließt, die dort mit der jeweiligen mittleren Nennweite endet.

6. Wasserzähler nach einem der Ansprüche 1 - 3, **dadurch gekennzeichnet, dass** sich an die Zone (10) für die größte Nennweite eine parallel oder nahezu parallel zur Längsachse (12) des Wasserzählers verlaufende Zone der Innenkontur anschließt, die in eine sich vor dem Einlaufbeginn (9) auf die größte Nennweite konisch erweiternde Zone (14) übergeht.

7. Verfahren zum Betreiben von Wasserzählern für den Einbau in Rohrleitungen einer Nennweiten-Gruppe mit aufeinander folgenden Nennweiten, wobei der Wasserzähler ein Gehäuse (1) mit fluchtendem Einlaufbereich (2) und Auslaufbereich (4) aufweist, zwischen denen gleichachsig ein Messeinsatz (3) angeordnet ist, der für alle Nennweiten der Nennweiten-Gruppe gleich ist und einen Messring (3.1) besitzt, in dem koaxial ein stromauf liegendes Haltemittel (6) und ein stromab liegendes Haltemittel (7) angeordnet sind, zwischen denen ein Flügelrad (8) drehbar gelagert ist, dessen Flügel (8.2) in einen zwischen den Haltemitteln (6, 7) und dem Messring (3.1) gebildeten Strömungs-Ringkanal (16) hineinragen, **dadurch gekennzeichnet, dass** eine dem stromauf liegenden Haltemittel (6) benachbarte Zone (10) der Innenkontur des Einlaufbereiches (2) für alle Nennweiten der Nennweiten-Gruppe gleich ist, indem sie sich in Richtung zum Einlaufbeginn (9) hin verjüngt und sich zum Haltemittel (6) etwa mit dem Durchmesser (D) des Ringkanals (16) öffnet, und die Wasserzähler so betrieben werden, dass unabhängig von der Nennweite der angeschlossenen Rohrleitung unmittelbar vor dem Flügelrad (8) eine im wesentlichen rechteckige Geschwindigkeitsverteilung (19) bei im wesentlichen parallel zur Wandung des Ringkanals (16) ausgerichteten Strömungsfäden vorliegt.

## Claims

1. Water meter for installation in pipelines of a nominal width-group with successive nominal widths, having a housing (1) with an aligned inflow region (2) and outflow region (4) and a measuring insert (3) disposed coaxially between said regions, which is identical for all nominal widths of the nominal width-groups and has a measuring annulus (3.1); in which upstream holding means (6) and downstream holding means (7) are coaxially disposed between which an impeller hub (8) is rotatably supported whose vanes (8.2) project into an annular channel (16) formed between the holding means (6, 7) and the measuring annulus (3.1), **characterized in that** a zone (10), adjacent the upstream holding means (6), of the inner contour of the inflow region (2) is identical for all nominal widths of the nominal-width group and tapers in the direction toward the inflow origin (9) and opens toward the holding means (6) approximately with the diameter (D) of the annular channel (16) and the inner contour of the inflow region (2) and the outer contour of the upstream holding means (6) are configured in such a way that independently of the nominal width of the connected pipeline in the annular channel (16) directly in front of the impeller hub (8) a substantially rectangular velocity distribution obtains with stream lines directed substantially parallel to the wall of the annular channel (16).

2. Water meter according to Claim 1, **characterized in that** the upstream holding means (6) has a substantially perpendicular face (6.1) toward a stream incidence, which makes a transition into a cylindrical or slightly conically diverging shell surface (6.3) forming the inner wall of the annular channel (16), wherein the transition is designed in such a way that a substantially rectangular velocity distribution obtains directly in front of the impeller hub (8).

3. Water meter according to Claim 2, **characterized in that** the transition is a radius (6.2).

4. Water meter according to any one of the preceding claims, **characterized in that** the conical tapering of the zone (10) continues as a second tapering zone (11) for the smallest nominal width of the nominal width-group up to the inflow origin (9) and there ends with the smallest nominal width.

5. Water meter according to any one of Claims 1 - 3, **characterized in that** adjoining the zone (10) for one or more mean nominal widths is a zone (13) of the inner contour extending up to the inflow origin (9) parallel or substantially parallel to the longitudinal axis (12) of the water meter, which ends there with the particular mean nominal width.

6. Water meter according to any one of Claims 1 - 3, **characterized in that** adjoining the zone (10) for the greatest nominal width is a zone of the inner contour, extending parallel or substantially parallel to the longitudinal axis (12) of the water meter, which makes a transition into a zone (14) widening conically before the inflow origin (9) to the greatest nominal width.

7. Method for operating water meters for installation in pipelines of a nominal width-group with successive nominal widths, wherein the water meter has a housing (1) with an aligned inflow region (2) and outflow region (4) between which a measuring insert (3) is coaxially disposed, which is identical for all nominal widths of the nominal width-group and has a measuring annulus (3.1) in which upstream holding means (6) and downstream holding means (7) are coaxially disposed between which an impeller hub (8) is rotatably supported, whose vanes (8.2) project into an annular flow channel (16) formed between the holding means (6, 7) and the measuring annulus (3.1), **characterized in that** a zone (10), adjacent the upstream holding means (6), of the inner contour of the inflow region (2) is identical for all nominal widths of the nominal-width group and tapers in the direction toward the inflow origin (9) and opens toward the holding means (6) approximately with the diameter (D) of the annular channel (16) and the water meters are operated in such a way that independently of the nominal width of the connected pipeline directly in front of the impeller hub (8) a substantially rectangular velocity distribution (19) obtains with stream lines directed substantially parallel to the wall of the annular channel (16).

## Revendications

1. Compteur d'eau destiné à être incorporé dans des tuyauteries d'un groupe de diamètres nominaux qui se succèdent, avec un boîtier (1) comportant une zone d'entrée alignée (2) et une zone de sortie (4), entre lesquelles est disposé, de manière coaxiale, un cadre de mesure (3) qui est identique pour tous les diamètres nominaux du groupe de diamètres nominaux et équipé d'une bague de mesure (3.1), dans laquelle un moyen de maintien (6) est disposé en amont, de manière coaxiale, et un moyen de maintien (7) est disposé en aval, moyens de maintien, entre lesquels est logé de manière rotative une roue hélice (8), dont les pales (8.2) font saillie dans un canal annulaire (16) formé entre les moyens de maintien (6, 7) et la bague de mesure 3.1, **caractérisé en ce qu'**une zone (10), voisine au moyen de maintien (6) disposé en amont, du contour interne de la zone d'entrée (2) est identique pour tous les diamètres nominaux du groupe de diamètres nominaux en diminuant en direction du début de l'entrée (9) et en s'ouvrant en direction du moyen de maintien (6) à peu près avec le même diamètre (D) du canal annulaire (16) et **en ce que** le contour interne de la zone d'entrée (2) et le contour externe du moyen de maintien (6), disposé en amont, sont conçus de manière qu'une répartition de vitesse essentiellement rectangulaire à filets de courant orientés essentiellement parallèlement à la paroi du canal annulaire (16) existe dans le canal annulaire (16), immédiatement devant la roue hélice (8), indépendamment du diamètre nominal de la tuyauterie raccordée.

2. Compteur d'eau suivant la revendication 1, **caractérisé en ce que** le moyen de maintien (6), situé en amont, présente une surface d'attaque (6.1) essentiellement perpendiculaire qui se transforme en une nappe (6.3) cylindrique ou divergente de façon légèrement conique formant la paroi interne du canal annulaire (16), la transformation étant conçue de façon qu'une répartition de vitesse essentiellement rectangulaire existe immédiatement devant la roue hélice (8).

3. Compteur d'eau suivant la revendication 2, **caractérisé en ce que** la transformation est un rayon (6.2).

4. Compteur d'eau suivant une des revendications précédentes, **caractérisé en ce que** pour le diamètre nominal le plus petit du groupe des diamètres nominaux, la diminution conique de la zone (10) se prolonge par une seconde zone (11) diminuant jusqu'au début de l'entrée (9), où elle se termine par le diamètre nominal le plus petit.

5. Compteur d'eau suivant une des revendications 1 à 3, **caractérisé en ce que** pour un ou plusieurs diamètres nominaux moyens, une zone (13) du contour interne fait suite à la zone (10) et s'étend parallèlement ou à peu près parallèlement à l'axe longitudinal (12) du compteur d'eau jusqu'au début de l'entrée (9), où elle se termine par le diamètre nominal moyen respectif.

6. Compteur d'eau suivant une des revendications 1 à 3, **caractérisé en ce que** pour le diamètre nominal le plus grand, une zone du contour interne s'étendant parallèlement ou à peu près parallèlement à l'axe longitudinal (12) du compteur d'eau fait suite à la zone (10) et se transforme en une zone (14) s'élargissant au diamètre nominal le plus grand devant le début de l'entrée (9).

7. Procédé d'exploitation de compteurs d'eau, destinés à être incorporés dans des tuyauteries d'un groupe de diamètres nominaux qui se succèdent, le compteur d'eau présentant un boîtier (1) comportant une zone d'entrée alignée (2) et une zone de sortie (4), entre lesquelles est disposé, de manière coaxiale, un cadre de mesure (3), qui est identique pour tous les diamètres nominaux du groupe de diamètres nominaux et qui présente une bague de mesure (3.1), dans laquelle sont disposés en amont, de manière coaxiale, un moyen de maintien (6) et en aval, un moyen de maintien (7), entre lesquels est logé de manière rotative une roue hélice (8), dont les pales (8.2) font saillie dans un canal d'écoulement annulaire (16) formé entre les moyens de maintien (6, 7) et la bague de mesure 3.1, **caractérisé en ce qu'**une zone (10) voisine au contour interne de la zone d'entrée (2) est identique pour tous les diamètres nominaux du groupe de diamètres nominaux en diminuant en direction du début de l'entrée (9) et en s'ouvrant envers le moyen de maintien (6) à peu près avec le diamètre (D) du canal annulaire (16) et **en ce que** les compteurs d'eau sont exploités de manière qu'une répartition de vitesse (19) essentiellement rectangulaire (19) à filets d'écoulement orientés essentiellement parallèlement à la paroi du canal annulaire (16) existe immédiatement devant la roue hélice (8), indépendamment du diamètre nominal de la tuyauterie raccordée.
